# EUROPÄISCHE PATENTSCHRIFT

(11) **EP 2 597 570 B1**
(45) Veröffentlichungstag und Bekanntmachung des Hinweises auf die Patenterteilung: **31.10.2018**
(21) Anmeldenummer: 13155754.8
(22) Anmeldetag: 16.03.2004
(51) Int. Cl.: G06F 9/50

(54) **Clusteranordnung für Dezentrale Lastverteilung**
Cluster arrangement
Agencement de grappe

(30) Priorität: 18.06.2003 DE 10327601; 04.07.2003 DE 10330322
(43) Veröffentlichungstag der Anmeldung: 29.05.2013
(62) Teilanmeldung aus: 04720840.0
(73) Patentinhaber: Fujitsu Technology Solutions Intellectual Property GmbH, 80807 München (DE); Atos IT Solutions and Services GmbH, 81739 München (DE)
(72) Erfinder: Frieß, Bernhard, 68775 Ketsch (DE); Kraus, Rudi, 67158 Ellerstadt (DE); Nawabi, Grana, 76669 Bad Schönborn (DE)
(74) Vertreter: Epping - Hermann - Fischer

(56) Entgegenhaltungen:
- FR-A- 2 816 419
- HOU C-J ET AL: "Implementation of Decentralized Load Sharing in Networked Workstations Using the Condor Package", JOURNAL OF PARALLEL AND DISTRIBUTED COMPUTING, ELSEVIER, AMSTERDAM, NL, Bd. 40, Nr. 2, 1. Februar 1997 (1997-02-01), Seiten 173-184, XP004419084, ISSN: 0743-7315
- CONDOR TEAM: "Condor Version 6.2.2 manual", CONDOR MANUAL, UNIVERSITY OF WISCONSIN, MADISON, WI, US, Nr. version 622, 5. Dezember 2001 (2001-12-05), Seiten I-XVI,1, XP002336280,
- AN-CHOW LAI ET AL: "Load balancing in distributed shared memory systems", PERFORMANCE, COMPUTING, AND COMMUNICATIONS CONFERENCE, 1997. IPCCC 1997., IEEE INTERNATIONAL PHOENIX, TEMPE, AZ, USA 5-7 FEB. 1997, NEW YORK, NY, USA,IEEE, US, 5. Februar 1997 (1997-02-05), Seiten 152-158, XP010216985, ISBN: 0-7803-3873-1
- DANDAMUDI S P: "SENSITIVITY EVALUATION OF DYNAMIC LOAD SHARING IN DISTRIBUTED SYSTEMS", IEEE CONCURRENCY, IEEE SERVICE CENTER, PISCATAWAY, NY, US, Bd. 6, Nr. 3, Juli 1998 (1998-07), Seiten 62-72, XP000782081, ISSN: 1092-3063

## Beschreibung

Die Erfindung betrifft eine Clusteranordnung sowie ein Verfahren in einer Clusteranordnung aus zumindest zwei Applikationsknoten und einem Kontrollknoten, die mit einem Netzwerk verbunden sind.

Ein Verbund aus mehreren über ein Netzwerk gekoppelten Rechnern, die eine gestellte Aufgabe gemeinsam erledigen, wird als Cluster bezeichnet. Die zu erledigende Aufgabe wird dabei in kleine Teilaufgaben zerlegt und an die einzelnen Rechner verteilt. Eine bekannte Art von Clustern sind die Biowulf-Cluster (www.biowulf.org), die vor allem für sehr rechenaufwendige Aufgaben verwendet werden. Bei einer anderen Form von Clustern steht nicht die Rechengeschwindigkeit im Vordergrund, sondern die Verfügbarkeit des Clusters. Bei dieser Form des Clusters muß gewährleistet sein, daß bei einem Ausfall eines Rechners innerhalb des Clusters die anderen Rechner die Aufgaben des ausgefallenen Rechners möglichst ohne oder nur mit geringem Zeitverlust übernehmen. Beispiele für solche Cluster sind Webserver innerhalb des Internets oder auch Anwendungen mit zentraler Datenspeicherung mit einer relationalen Datenbank.

Cluster mit dieser Arbeitsweise werden auch als Hochverfügbarkeitscluster bezeichnet und weisen mehrere einzelne Server auf, die über ein Netzwerk miteinander verbunden sind. Jeder Server bildet einen Knoten des Clusters. Server, die Anwendungen bearbeiten werden als Applikationsknoten bezeichnet, Server mit zentralen Verwaltungs- Steuerungs- oder Kontrollaufgaben bilden Kontrollknoten. Auf den Applikationsknoten werden verschiedene Anwendungen oder verschiedene Teilanwendungen einer großen Applikation ausgeführt, wobei die einzelnen Anwendungen untereinander in Verbindung stehen können. Weitere Rechner außerhalb des Clusters, als Clients bezeichnet, greifen auf die innerhalb des Clusters laufenden Anwendungen zu und rufen Daten ab.

Neben dem Applikationsknoten enthält ein solcher Cluster den Kontrollknoten, der eine Zentralinstanz darstellt. Der Kontrollknoten überwacht die laufenden Anwendungen auf den einzelnen Applikationsknoten, beendet diese gegebenenfalls oder startet sie neu. Bei einem Ausfall eines Applikationsknotens startet die Zentralinstanz auf den übrigen Applikationsknoten die ausgefallenen Anwendungen neu. Dazu wählt sie einen Knoten aus, der noch ausreichend Kapazität besitzt. Je nach Konfiguration und Auslastung des Clusters wird dabei ein bislang nicht verwendeter Applikationsknoten benutzt oder die Rechenlast der neu zu startenden Anwendungen möglichst gleichmäßig verteilt, ein Vorgang der als Loadbalancing bezeichnet wird.

Um die Zentralinstanz oder die Kontrollknoten ihrerseits vor Ausfall zu schützen, ist es notwendig, diese redundant vorzusehen, meist durch weitere Server, der die Zentralinstanz spiegelt. Eine solche Clusterlösung hat jedoch den Nachteil, daß der Datenaustausch zwischen Applikationsknoten und der Zentralinstanz sehr groß ist. Zusätzlich verbraucht jeder Applikationsknoten Rechenzeit, um die Abfragen der Zentralinstanz zu beantworten. Da außerdem der Kontrollknoten jedes mögliche Ausfallszenario bearbeiten können muß, steigt der Konfigurationsaufwand und das damit verbundene Risiko einer fehlerhaften Konfiguration beträchtlich.

Rodman et al. beschreiben in "Linux FailSafe Administrator's Guide" (2000-10-05) eine eine Clusteranordnung mit einem Netzwerk sowie mehrere jeweils einen Applikationsknoten bildende Datenverarbeitungssysteme, auf denen ein Applikationsagent ausgeführt wird. Dieser überwacht und erkennt auf dem Applikationsknoten ausgeführte Instanzen und startet bei Bedarf eine neue Instanz bzw. führt einen Restart einer vorzeitig beendeten Instanz durch.

Des Weiteren zeigt FR 2816419 ein Clustersystem mit einem Hauptserver und mehreren nachgeschalteten Hilfsservern. Einer der Server entscheidet darüber, ob Aufgaben an andere Server übertragen werden sollen. In einer Verhandlungsphase mit den anderen Servern erfolgt eine Einschätzung der Serverlast mittels Steuereinheiten. Ein Entscheidungsmodul bestimmt, ob ein Host-Server in der Lage ist, eine Aufgabe unter Berücksichtigung von Einschränkungen wie dem Vorhandensein von entsprechender Modulen und Ressourcen zu übernehmen.

Eine Veröffentlichung von Hou et *al.* zeigen eine Clusteranordnung mit einer dezentralen Lastenverteilung (Journal of Parallel and Distributed Computing, Volume 40, Issue 2, 1 February 1997, Pages 173-184). Die vorgeschlagene Lasterverteilung stellt eine Ergänzung des Condor Systems dar. Die Ergänzungen betreffen Informationsregelungen nach denen Statusänderungen in einer Workstation an alle übrigen Workstationversand werden. Die Lastenverteilung erfolgt durch die Verwendung von Listen, die eine Reihenfolge der Workstations definieren nach der Prozess über das Netzwerk abgegeben werden. Die Schrift CONDOR TEAM: "Condor Version 6.2.2 manual", CONDOR MANUAL, UNIVERSITY OF WISCONSIN, MADISON, WI, US, Nr. version 622, 5. Dezember 2001 (2001-12-05), Seiten I-XVI,1, XP002336280, beschreibt Details des Condor Systems.

Es ist Aufgabe der vorliegenden Erfindung, eine Clusteranordnung vorzusehen, die mit einem deutlich geringeren Konfigurationsaufwand betrieben werden kann.

Diese Erfindung ist in den nebengeordneten Patentansprüchen angegeben.

Gemäß einem Aspekt ist ein Cluster mit einem ersten Netzwerk, zumindest zwei jeweils einen Applikationsknoten bildende Datenverarbeitungssysteme, die jeweils ein Betriebssystem aufweisen vorgesehen. Jeder Applikationsknoten weist einen Applikationsagenten auf und zumindest ein Applikationsknoten weist eine Instanz auf, die ausgeführt wird. Der Applikationsagent, der ein Dienst des Betriebssystems ist und nach der Initialisierung des Betriebssystems gestartet wird, enthält zumindest folgende Funktionen:
- Start (ST) einer neuen Instanz (I3);
- Beenden einer ausgeführten Instanz (I3);
- Beurteilung (BE) und Entscheidung mittels einer Beurteilungsfunktion und einer Liste (T), ob die Ausführung einer neuen Instanz (I3) auf dem Applikationsknoten (AK) möglich ist;
- Überwachung (UB) und Erkennen auf dem Applikationsknoten (AK) ausgeführter Instanzen (I1, I2, I3), wobei die Überwachung (UB) weiter umfasst: Erstellen der Liste (T), die jeweils die auf dem Applikationsknoten (AK) ausgeführten Instanzen (I1, I2) und alle für die Ausführung der ausgeführten Instanz notwendigen Daten (D) als Teillisten (TI1, TI2) beinhaltet, und die Liste (T) weiter eine Kennzeichnung aufweist, dass der Applikationsknoten (AK) zur Ausführung neuer Instanzen zur Verfügung steht, wenn die Überwachung (UB) keine zu überwachenden Instanzen ermittelt
- und die Überwachung (UB) weiter ein Erkennen eines nicht gewünschten vorzeitigen Beendens einer fehlerhaft
- ausgeführten Instanz (I3) durch Auswertung der Daten (D) der Liste (T) umfasst;
- Neustart der fehlerhaft ausgeführten Instanz (I3);
- Beenden der fehlerhaft ausgeführten Instanz (I3) bei nicht efolgreichem Neustart sowie Erzeugen einer Teilliste (TI3) in der Liste (T) mit der fehlerhaft ausgeführten Instanz (I3);
- Aufforderung (AF) an andere Applikationsagenten (AA) mit dem Netzwerk (NW1) verbundener Applikationsknoten zur Ausführung der fehlerhaft ausgeführten Instanz, indem die Teilliste (TI3) an die anderen Applikationsagenten (AA) der mit dem Netzwerk (NW1) verbundenen Applikationsknoten (AK) versandt wird;
- Meldung (ME) an Applikationsagenten (AA) mit dem Netzwerk (NW1) verbundener Applikationsknoten (AK) nach einer Annahme der Aufforderung (AF) zur Ausführung einer Instanz (I3);
- Meldung (ME) an die anderen Applikationsagenten (AA) anderer mit dem Netzwerk (NW1) verbundener Applikationsknoten (AK), wenn der Applikationsagent eine Aufforderung zur Ausführung einer Instanz ablehnt.

Auf jedem Applikationsknoten ist ein Applikationsagent oder ein Programm vorgesehen, der oder das selbständig und unabhängig von den Applikationsagenten auf andere Applikationsknoten sowie von einer Zentralinstanz arbeitet. Insbesondere ist er für eine selbständige Entscheidungsfindung darüber ausgebildet, ob der Start bzw. die Ausführung einer neuen Instanz möglich ist. Der Applikationsagent führt diese Funktion aus, wenn der Applikationsagent eine Aufforderung zur Ausführung einer Instanz erhält oder die Ausführung einer Instanz für den fehlerfreien Betrieb notwendig wird. Die Beurteilung erfolgt zweckmäßig unter Einbeziehung eines Gedächtnisses, den Informationen, die in der Aufforderung enthalten sind und vorher definierter Regeln. Das Gedächtnis des Applikationsagenten ist so ausgebildet, daß es Informationen über einen vergangenen Betriebszustand enthält.

Zusätzlich weist der Applikationsagent eine Funktion zur Aufforderung an andere Applikationsagenten auf. Dadurch ist es dem Agenten möglich, bei einem drohenden Ausfall selbständig und unabhängig von einer Zentralinstanz die auf dem Applikationsknoten ausgeführter Instanzen an andere Applikationsknoten abzugeben. Alternativ läßt sich mittels dieser Funktion auch eine Aufforderung zur Ausführung einer Instanz an andere Applikationsagenten senden. Die Funktion ist dahingehend ausgeführt, daß sie alle Parameter für einen fehlerfreien Betrieb der auszuführenden Instanz bereitstellt.

Insbesondere kann der Applikationsagent mit diesen Funktionen ein selbständiges auf den Applikationsknoten beschränktes Loadbalancing durchführen.

Mit der Bereitstellung der Applikationsagenten auf jedem Applikationsknoten wird eine Zentralinstanz entlastet, der Datenverkehr zwischen Zentralinstanz und Applikationsknoten reduziert und die Überwachungsfunktionen auf die Applikationsknoten verlagert. Die Applikationsagenten sind ihrerseits autonom.

Es ist zweckmäßig eine Funktion im Applikationsagenten vorzusehen, durch die eine Meldung an Applikationsagenten anderer Applikationsknoten generiert wird, wenn der Applikationsagent eine Aufforderung zur Ausführung einer Instanz ablehnt.

Es ist von besonderem Vorteil, dass die Überwachungsfunktion des Applikationsagenten auf dem Applikationsknoten die Erstellung einer Liste beinhaltet. Die Liste enthält jeweils auf dem Applikationsknoten ausgeführten Instanzen und alle für die Ausführung der ausgeführten Instanzen notwendigen Daten und Parameter. Zweckmäßigerweise ist die Liste in Teillisten unterteilt, wobei jede Teilliste die Daten für eine Instanz enthält. Zusätzlich ist es von Vorteil, wenn diese Liste auch Informationen und Betriebsparameter über den Applikationsknoten enthält. Diese werden vorteilhaft bei einer Beurteilung über eine mögliche Ausführung verwendet. In besonders einfacher Weise erfolgt so eine Aufforderung an weitere Applikationsagenten mit dem Netzwerk verbundene Applikationsknoten durch Versenden einer Liste bzw. einer Teilliste. In einer Ausführungsform weist die Clusteranordnung eine Speichereinrichtung auf, die mit dem ersten Netzwerk verbunden ist. Die Speichereinrichtung ist für einen Zugriff der Applikationsknoten ausgebildet. Die Speichereinrichtung enthält zumindest eine auf einem Applikationsknoten ausführbare Instanz. Dadurch sind die Applikationsknoten der Clusteranordnung imstande, auf eine Instanz innerhalb der Speichereinrichtung zuzugreifen und für eine Ausführung zu laden. Es ist zweckmäßig alle Daten in der Speichereinrichtung abzulegen und diese für alle Applikationsknoten nutzbar zu machen. Diese gemeinschaftlich genutzter Speicher reduziert die Kosten und vereinfacht die Wartung der Clusteranordnung.

In diesem Zusammenhang ist es sinnvoll, wenn in der Speichereinrichtung das Betriebssystem für die Applikationsknoten abgelegt ist. Dadurch muß das Betriebssystem nicht auf jedem Applikationsknoten einzeln installiert sein, sondern wird bei einem Initialisierungsvorgang eines Applikationsknotens von der Speichereinrichtung geladen. Updates bzw. Veränderungen am Betriebssystem lassen sich somit in einfacher Weise ausführen. Dabei ist es besonders zweckmäßig, wenn der Applikationsagent eines jeden Applikationsknotens ein Dienst oder ein Service des auf dem Applikationsknoten laufenden Betriebssystems ist. Der Applikationsagent ist in der gemeinsam genutzten Speichereinrichtung abgelegt. Sinnvollerweise wird er bei einer Initialisierung eines Applikationsknotens automatisch gestartet.

In einer Ausführungsform ist ein Applikationsknoten vorgesehen, auf dem die Ausführung einer neuen Instanz möglich ist. Somit enthält die Clusteranordnung immer einen Applikationsknoten, der bei Ausfall eines Applikationsknotens die auf dem ausgefallenen Knoten laufenden Anwendungen übernimmt.

In einer Ausführungsform weist die Clusteranordnung zumindest ein als Kontrollknoten ausgebildetes Datenverarbeitungssystem auf, welches mit dem ersten Netzwerk verbunden ist. Der Kontrollknoten weist ein Betriebssystem sowie einen Kontrollagenten auf, der folgende Funktionen umfaßt:
- Überprüfung der Funktionsfähigkeit der Applikationsknoten, die mit dem ersten Netzwerk verbunden sind;
- Aufforderung an Applikationsagenten mit dem Netzwerk verbundener Applikationsknoten zur Ausführung einer Instanz;
- Bestimmung eines Applikationsknotens und Aufforderung an diesen Applikationsknoten zur Ausführung einer neuen Instanz.

Mit einem solchen Kontrollagenten auf dem Kontrollknoten wird der Datenaustausch zwischen Applikations- und Kontrollknoten deutlich reduziert. Insbesondere kann die Überprüfung der Funktionsfähigkeit der Applikationsknoten durch einen einfachen periodischen Anwesenheitstest erfolgen. In einer sinnvollen Ausführungsform wird der Applikationsagent eines Applikationsknotens von dem Kontrollagenten auf seine Anwesenheit und seine Funktionsfähigkeit überprüft. Auf einen Überprüfung einzelner Instanzen wird verzichtet, da diese durch den Applikationsagenten vorgenommen wird. Bei einem Totalausfall eines Applikationsknotens bestimmt der Kontrollagent einen neuen Applikationsknoten für die Ausführung der ausgefallenen Instanzen. Dadurch ist immer ein fehlerfreier Betrieb gewährleistet.

Es ist vorteilhaft, wenn bei einer Überprüfung der Applikationsknoten die zu überprüfenden Applikationsknoten über die von den Applikationsagenten der Applikationsknoten erstellten Liste ermittelbar ist. Dabei wird die von den Applikationsagenten der Applikationsknoten erstellte Liste dem Kontrollagenten zur Verfügung gestellt, der sie auswertet. Durch die Liste erhält der Kontrollagent Kenntnis über die innerhalb der Clusteranordnung vorhandenen Applikationsknoten. Eine aktive Suche nach in der Clusteranordnung vorhandener Knoten kann somit entfallen. Insbesondere lassen sich bei dieser Ausführungsform weitere Applikationsknoten der Clusteranordnung in einfacher Weise hinzufügen. Nach Übermittlung der Liste an den Kontrollagenten erfolgt eine periodische Überprüfung des neuen Applikationsknotens.

Es ist zweckmäßig, wenn die Aufforderung zur Ausführung einer Instanz eine erstellte Teilliste eines Applikationsagenten eines Applikationsknotens aufweist. Die Funktion einer Aufforderung zur Ausführung ist im Kontrollagenten und im Applikationsagenten zweckmäßig gleich ausgebildet.

In einer zweckmäßigen Ausführungsform ist die von den Applikationsagenten erstellte Liste und/oder die Aufforderung zur Ausführung und/oder die Meldung nach einer Annahme der Aufforderung zur Ausführung als zumindest eine Datei der Speichereinrichtung abgelegt. Dies ermöglicht einen Zugriff und eine autonome Auswertung durch jeden Applikationsagenten ohne die Anwesenheit einer Zentral- bzw. Kontrollinstanz. Darüber hinaus wird vorteilhaft eine Aufforderung durch ein einfaches Bereitstellen einer Liste in einem Speicherbereich der Speichereinrichtung signalisiert, die Meldung nach einer Annahme durch Entfernung dieser Liste.

Eine Ausführungsform ist es, wenn jede in der Speichereinrichtung abgelegte Instanz eine eindeutige Kennzeichnung aufweist, die dem Applikationsknoten zugeordnet wird, auf dem die Instanz ausgeführt wird. Dadurch wird es möglich, jede Instanz auf jedem Applikationsknoten unabhängig von weiteren bereits ausgeführten Instanzen auszuführen. Der Zugriff einer ersten Instanz auf eine zweite Instanz erfolgt über die eindeutige Kennzeichnung. Dadurch benötigen die einzelnen Instanzen und die Applikationsagenten keine Kenntnisse über den strukturellen Aufbau der Clusteranordnung. Es ist natürlich möglich, daß einem Knoten mehrere Kennzeichnungen zugeordnet sind, falls mehrere Instanzen auf diesem Knoten ausgeführt werden. In einer Ausführungsform ist die eindeutige Kennzeichnung eine virtuelle IP-Adresse.

Es ist vorteilhaft, das erste Netzwerk für eine Kommunikation mit dem TCP/IP oder dem NFS-Protokoll auszubilden. Beide Protokolle erlauben eine Vielzahl von Datenübertragungs- und Verwaltungsmöglichkeiten und lassen sich besonders einfach realisieren.

In diesem Zusammenhang ist es zweckmäßig, wenn zumindest ein Kontrollknoten Mittel zur Steuerung eines Initialisierungsvorgangs der Applikationsknoten aufweist, wobei der Initialisierungsvorgang ein Kommando zum Laden des Betriebssystems des Applikationsknotens enthält. Somit wird durch das Mittel von dem Kontrollknoten ein Initialisierungsvorgang auf einem Applikationsknoten gestartet, der zum Laden des Betriebssystems führt. Insbesondere können während des Initialisierungsvorgangs spezifische Kommandos bzw. Parameter für die Applikationsknoten übergeben werden.

In einer Ausführungsform sind die zumindest zwei Applikationsknoten und der zumindest eine Kontrollknoten der Clusteranordnung mit einem zweiten Netzwerk verbunden, das mit einem Client-Rechner gekoppelt ist. Dieser Rechner wird meist dazu verwendet, Anfragen an die auf den Applikationsknoten ausgeführten Instanzen zu senden. Durch die Ausbildung eines zweiten Netzwerks wird der Datenstrom zwischen den Applikationsknoten sowie der Datenstrom zwischen den Client-Rechnern und dem Applikationsknoten getrennt. Die ausgetauschte Datenmenge auf einem Netzwerk wird somit verringert und gleichzeitig durch die Trennung die Sicherheit gegen Ausspähung oder unberechtigten Zugriff erhöht.

Eine besonders vorteilhafte Ausführungsform ist die Ausbildung der in der Speichereinrichtung abgelegten Instanzen als Teil einer Datenbank. Alternativ sind die abgelegten Instanzen Anwendungen, die auf eine Datenbank zugreifen. Die Datenbank ist dabei vorteilhaft Teil der Speichereinrichtung.

In einer Ausführungsform ist jedem Datenverarbeitungssystem ein Identifikationskennzeichen zugeordnet. Datenverarbeitungssysteme der Clusteranordnung mit gleichem Kennzeichen bilden einen Pool. So lässt sich in einfacher Weise eine Clusteranordnung weiter unterteilen, die einzelne Aufgaben übernehmen können.

Ein Verfahren in einer Clusteranordnung aus zumindest zwei Applikationsknoten und einem Kontrollknoten, die mit einem Netzwerk verbunden sind, ist dadurch gekennzeichnet, daß der Kontrollknoten von den Applikationsknoten eine Liste mit allen auf den Applikationsknoten ausgeführten Instanzen sowie mit den für die Ausführung der Instanzen notwendigen Daten und Parameter erhält. Weiterhin überprüft der Kontrollknoten die Applikationsknoten in regelmäßigen Zeitabständen auf einen Ausfall und erstellt bei Ausfall eines Applikationsknotens eine Liste mit den auf dem ausgefallenen Applikationsknoten ausgeführten Instanzen und der für die Ausführung notwendigen Daten. Diese Liste leitet der Kontrollknoten an mit dem Netzwerk verbundene Applikationsknoten mit einer Aufforderung zur Ausführung weiter.

Mit diesem Verfahren überprüft der Kontrollknoten die Applikationsknoten lediglich auf einen Ausfall, mit anderen Worten, auf ihre Anwesenheit. Auf eine Überprüfung, Kontrolle oder Überwachung der auf dem Applikationsknoten ausgeführten Instanzen wird verzichtet. Dadurch wird die Datenmenge zwischen Applikationsknoten und Kontrollknoten deutlich reduziert. In einer Ausführungsform des Verfahrens sendet der Applikationsknoten bei einer Statusänderung der auf dem Knoten ausgeführten Instanzen eine Änderungsmitteilung oder eine neue Liste an den Kontrollknoten.

Es ist zweckmäßig, wenn der Kontrollknoten bei einem durch die Überwachungsfunktion registrierten Ausfall eines Applikationsknotens die von dem Applikationsknoten erstellte Liste zusammen mit einer Aufforderung zur Ausführung an den zumindest einen weiteren Applikationsknoten leitet. Alternativ erstellt ein Applikationsknoten eine Liste mit einer zur Ausführung bestimmten Instanz sowie mit den zur Ausführung notwendigen Daten und leitet diese Liste an den zumindest einen weiteren Applikationsknoten.

In einer anderen Ausführungsform ermittelt der Kontrollknoten bei Ausfall eines Applikationsknotens einen weiteren Applikationsknoten mittels der von den Applikationsknoten erstellten Liste und mittels einstellbarer Parameter. An den ermittelten Applikationsknoten wird eine Aufforderung zur Ausführung der auf dem ausgefallenen Applikationsknoten ausgeführten Instanzen gesendet. Dadurch läßt sich in effektiver Weise ein Loadbalancing mittels des Kontrollknotens für den gesamten Cluster durchführen. In diesem Zusammenhang sendet der Kontrollknoten ein Signal zum Beenden einer Instanz an einen ersten Applikationsknoten und ein Signal zur Ausführung der beendeten Instanz an einen zweiten Applikationsknoten.

Insbesondere ist mittels der erstellten Liste und der einstellbaren Parameter ein geeigneter Rechner für die Ausführung vorzeitig beendeter Instanzen ermittelbar. Es ist weiterhin sinnvoll, wenn der Kontrollknoten die zu überprüfenden Applikationsknoten durch Auswertung der von den Applikationsknoten erhaltenen Liste ermittelt. In einer Ausführungsform wird das Verfahren durch einen auf dem Kontrollknoten ausgeführten Kontrollagenten und einen auf den Applikationsknoten ausgeführten Applikationsagenten durchgeführt.

Weitere vorteilhafte Ausführungsformen ergeben sich aus den Unteransprüchen. Im weiteren wird die Erfindung anhand von Ausführungsbeispielen unter Berücksichtigung der Zeichnung im Detail erläutert. Es zeigen:
- Figur 1: ein erstes Ausführungsbeispiel einer Clusteranordnung
- Figur 2: ein Diagramm zur Erläuterung verwendeter Begriffe
- Figur 3: eine Funktionsübersicht des Applikationsagenten
- Figur 4: eine Funktionsübersicht des Kontrollagenten
- Figur 5: einen Ausschnitt der erfindungsgemäßen Anordnung gemäß Figur 1
- Figur 6: Ausführungsbeispiel einer Arbeitsweise eines Applikations- und eines Kontrollagenten.
- Figur 7: ein zweites Ausführungsbeispiel einer Clusteranordnung mit Poolbildung
- Figur 8: einen schematischen Ausschnitt eines les- und schreibbaren Speicherbereichs
- Figur 9: einen schematischen Ausschnitt eines von einem Applikationsagenten verwalteten Testaments

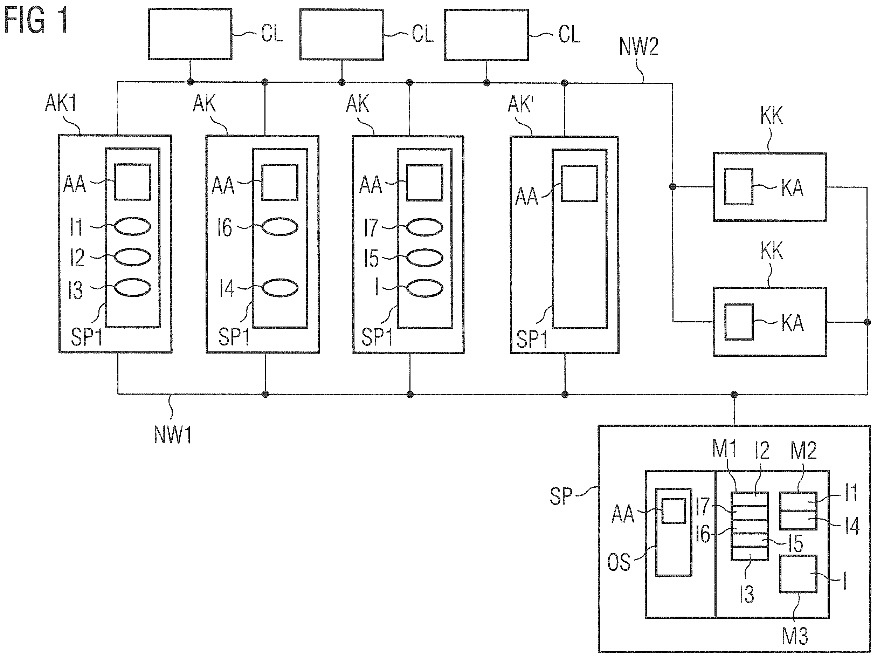

Figur 1 zeigt eine Clusteranordnung gemäß einem Ausführungsbeispiel der Erfindung mit sechs Datenverarbeitungssystemen. Vier dieser Datenverarbeitungssysteme, die als Server ausgebildet sind, bilden die Applikationsknoten AK1, AK, AK und AK'. Die beiden weiteren Server bilden jeweils einen Kontrollknoten KK. Alle Server weisen einen Hauptprozessor sowie einen Haupt- und/oder Festplattenspeicher SP1 auf. Der Speicher eines jeden Applikations- bzw. Kontrollknotens enthält ein Betriebssystem OS. Dieses besitzt Funktionen für die Steuerung von Programmen auf dem Applikationsknoten, Funktionen für die Überwachung und Aufrechterhaltung des Betriebs und für den Zugriff auf einzelne Komponenten des Knotens. Die Speicher SP1 der Applikationsknoten AK1, AK und AK' weisen weiterhin jeweils einen Applikationsagenten AA auf, der Teil des Betriebssystems OS ist. Die Speicher der Kontrollknoten KK enthalten einen Kontrollagenten KA.

Jeder Applikationsknoten AK1, AK und AK' ist über ein erstes Netzwerk NW1 mit den Kontrollknoten KK sowie einer Speichereinrichtung SP verbunden. Dieses Netzwerk erlaubt einen Datentransfer zwischen den Applikationsknoten AK1, AK und AK' untereinander, zwischen den Applikationsknoten AK1, AK, AK' und den Kontrollknoten KK sowie zwischen den Applikationsknoten, den Kontrollknoten und einer Speichereinrichtung SP. Ein zweites Netzwerk NW2 verbindet die Applikationsknoten und die Kontrollknoten mit Client-Rechnern CL. Die Clientrechner sind für Anfragen ausgebildet, die an die Applikationsknoten zur Bearbeitung gesendet werden.

Die Speichereinrichtung SP weist das Betriebssystem OS für alle Applikationsknoten Ak1, AK und AK' auf. Der Applikationsagent AA eines jeden Applikationsknotens ist ein Dienst dieses Betriebssystems OS und wird nach der Initialisierung des Betriebssystems gestartet. Es stellt einen Dämon dar, der im Hintergrund arbeitet. Des weiteren enthält die Speichereinrichtung SP mehrere Programmodule M1, M2 und M3. Dies sind größere Anwendungen, die ihrerseits in einzelne Instanzen unterteilt sein können. So enthält das Modul M1 fünf Instanzen, das Modul M2 zwei Instanzen, und das Modul M3 besteht aus einer Instanz I.

Die Instanzen der verschiedenen Module sind in den Speicher SP1 der Applikationsknoten AK1 und AK geladen und werden dort ausgeführt. So führt der Applikationsknoten AK1 die Instanz I1 des Moduls M2, sowie die Instanzen I2 und I3 des Moduls M1 aus, die beiden Applikationsknoten AK die Instanzen I4 bis I7 sowie die Instanz I. Auf dem Applikationsknoten AK' wird keine weitere Instanz ausgeführt.

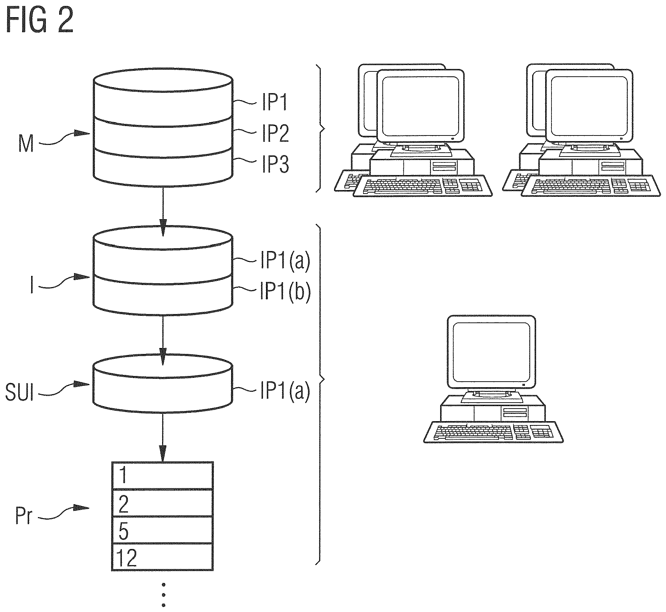

Der Zusammenhang zwischen Modul und Instanz ist der Figur 2 zu entnehmen. Ein Modul M ist eine größere Anwendung, die auf mehreren Rechnern ausgeführt wird. Dazu ist das Modul M in mehrere kleinere Einheiten, die Instanzen genannt werden unterteilt. Die einzelnen Instanzen kommunizieren gegebenenfalls untereinander und tauschen Daten aus. Dadurch ergibt sich eine Abhängigkeit. Ihrerseits sind die Instanzen in Subinstanzen SuI unterteilt, die aus einzelnen Prozessen Pr bestehen. Eine einzelne Instanz wird zusammen mit ihren Subinstanzen SuI und Prozessen Pr auf einem Rechner ausgeführt. Ein Knoten kann dabei auch mehrere Instanzen ausführen, die zu verschiedenen Modulen oder zum gleichen Modul gehören. Beispielsweise ist das Modul M2 mit den Instanzen I1 und I4 auf den Applikationsknoten AK1 und AK verteilt. Gleichzeitig laufen auf den Knoten AK1 die Instanzen I2 und I3 des Moduls M1.

Jeder Instanz ist eine eindeutige Kennzeichnung IP1, IP2, IP3 zugeordnet, die bei Ausführung der Instanz auf einem Applikationsknoten dem Applikationsknoten zugewiesen wird. Mittels dieser eindeutigen Kennzeichnung IP1, IP2, IP3 ist der Applikationsknoten identifizierbar, auf dem die Instanz ausgeführt wird. Der Wechsel einer Instanz von einem Applikationsknoten zu einem weiteren ist daher ohne Probleme möglich, denn die Kennzeichnung wird auf dem alten Applikationsknoten gelöscht und dem neuen zugewiesen. Ein Zugriff auf die Instanz erfolgt mit der zugehörigen eindeutigen Kennzeichnung. Im vorliegenden Ausführungsbeispiel ist die eindeutige Kennzeichnung durch eine virtuelle IP-Adresse definiert. Der Applikationsknoten AK1 erhält somit die virtuelle IP-Adresse der Instanz I1, I2 und I3. Ein Client CL, der über das Netzwerk NW2 auf die Instanz I1 zugreifen will, sendet seine Anfrage an die der Instanz I1 zugeordnete virtuelle IP-Adresse. Der Applikationsknoten AK1 empfängt die Anfrage, und leitet diese an die Instanz I1 weiter, die sie verarbeitet. Die Verwendung virtueller Adressen, die einer Instanz zugeordnet sind und bei Ausführung der Instanz dem Applikationsknoten zugeordnet werden, ermöglicht eine freie Wahl des Applikationsknotens.

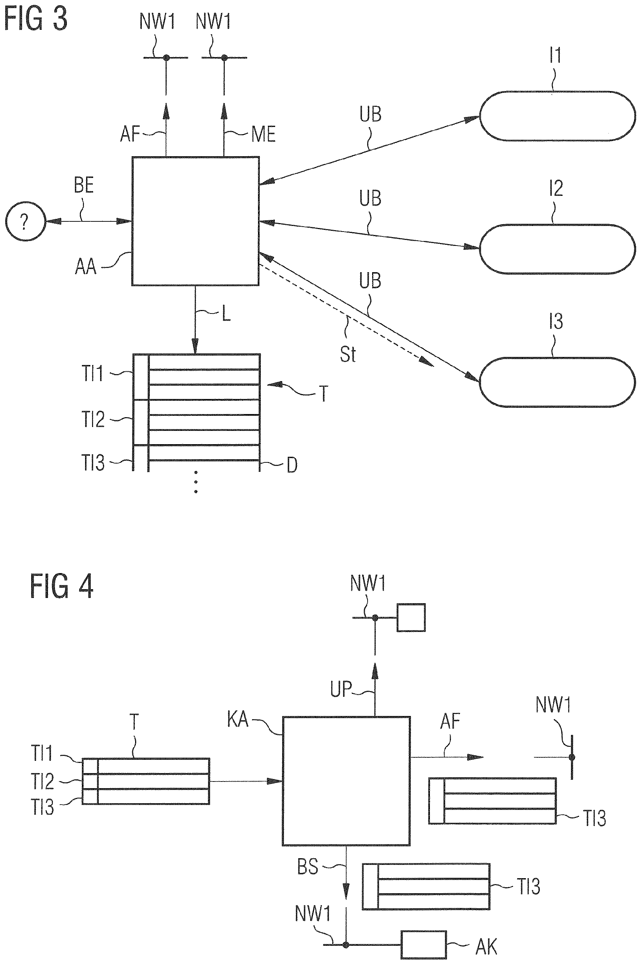

Die verschiedenen Funktionen des Applikationsagenten AA sind in der Figur 3 am Beispiel des Applikationsknotens AK1 erläutert. Auf diesem Applikationsknoten werden die Instanzen I1, I2 und I3 ausgeführt. Der Applikationsagent AA weist ein Überwachungsmittel UB auf und überwacht damit die Instanzen. Dazu gehört beispielsweise eine Messung der Prozessorauslastung des verbrauchten Speichers für jede Instanz, abgearbeitete Anfragen und weitere Betriebsparameter. Der Applikationsagent AA überwacht ferner die korrekte Betriebsweise und die Verfügbarkeit der Instanzen I1 bis I3. Weiterhin überprüft der Applikationsagent mit dem Überwachungsmittel, ob auf dem Applikationsknoten weitere zu überwachende Instanzen vorhanden sind. Das Überwachungsmittel ist so ausgebildet, daß es Instanzen erkennt, die zu überwachen sind. Zusätzlich erkennt es Abhängigkeiten zwischen Instanzen, die auf dem Applikationsknoten ausgeführt werden. Dazu wertet es unter anderem periodisch eine Liste aller auf dem Knoten laufenden Prozesse aus. Durch eine periodische Überprüfung werden auch nachträglich gestartete Instanzen erkannt und in die automatische Überwachung übernommen.

Weiterhin besitzt er eine Funktion zur Erzeugung L einer Liste T, die im weiteren Verlauf Testament genannt wird. Dieses Testament T besteht aus einzelnen Teiltestamenten TI1 bis TI3, in der alle wichtigen Daten D der einzelnen zu überwachenden Instanzen I1 bis I3 abgelegt sind. Zu den abgelegten Daten D gehören neben dem Namen der Instanz auch die Betriebsparameter, die für einen fehlerlosen Betrieb der Instanz notwendig sind. Beispiele hierfür sind notwendiger Speicher und Rechenkapazität, Umgebungsvariablen, Abhängigkeiten der Instanzen untereinander, zu anderen Instanzen, sowie zu Betriebsparametern und ähnliches. Zusätzlich sind im Testament Daten und Parameter über den Applikationsknoten enthalten. Diese sind beispielsweise Typ und Art des verwendeten Servers, Name, Ort, Speicher und Prozessor. Eine Auswertung dieser Parameter der Testamente aller Applikationsknoten ermöglicht die Bestimmung der Clusterstruktur und eröffnet weitere Konfigurationsmöglichkeiten.

Ermittelt die Überwachungsfunktion keine zu überwachenden Instanzen, so erkennt der Agent, daß der Applikationsknoten für die Ausführung neuer Instanzen zur Verfügung steht und kennzeichnet dies in dem Testament entsprechend.

Der Applikationsagent AA ist mit einer Startfunktion ST ausgebildet. Damit lädt er eine Instanz aus der Speichereinrichtung SP über das Netzwerk NW1 und bringt diese auf dem Applikationsknoten zur Ausführung. Die ausgeführte Instanz wird von dem Überwachungsmittel UB periodisch überprüft.

Mit einer Beurteilungs- und Entscheidungsfunktion BE, wertet der Applikationsagent AA aus, ob eine neue Instanz ausgeführt werden kann, trifft der Applikationsagent AA auf dem Applikationsknoten, auf dem die Instanz gestartet werden soll. Neben einer Messung der Betriebsparameter des Applikationsknotens, beispielsweise Prozessor und Speicherauslastung, und eines internen Gedächtnisses, wobei das Testament T Teil dieses Gedächtnisses ist, hängt die Entscheidung über einen Start einer neuen Instanz von definierten Regeln ab. Sind die Voraussetzungen erfüllt lädt der Applikationsagent AA die Instanz und führt sie aus.

Beispiele für definierte Regeln sind beispielsweise die Vorsehung einer Mindestreserve für die Prozessorleistung und den Speicher. Eine andere Regel ist die Definition, bestimmte Instanzen nur während einer definierten Zeitspanne auszuführen. Wieder eine andere Regel besagt, beim Start einer neue Instanz diese mit der Überwachungsfunktion auf Abhängigkeiten zu überprüfen und von der Instanz abhängige bislang nicht gestartete Instanzen ebenfalls zur Ausführung zu bringen.

Nach dem Start einer neuen Instanz sendet der Applikationsagent eine Meldung ME über das Netzwerk NW1 an die anderen Applikationsagenten weiterer Applikationsknoten. Damit zeigt er die erfolgreiche Ausführung einer neu gestarteten Instanz an.

Durch sein Überwachungsmittel UB für die einzelnen Instanzen I1, I2 und I3 ist der Applikationsagent in der Lage, ein nicht gewünschtes vorzeitiges Beenden einer überwachten Instanz I3 zu erkennen. Um den fehlerfreien Betrieb weiterhin aufrecht zu erhalten weist er eine Funktion zum Beenden der fehlerhaften Instanz I3 und zum Neustart auf. Ist ein Neustart nicht erfolgreich, erzeugt der Agent aus dem Testament T das Teiltestament TI3 der fehlerhaften Instanz I3 und sendet eine Aufforderung AF zum Starten dieser Instanz mit dem Teiltestament TI3 über das Netzwerk NW1 an die weiteren Applikationsknoten. Dann kann er die fehlerhafte Instanz I3 beenden oder von weiteren Startversuchen absehen.

Zudem weist er eine Funktion zum Beenden einer auf dem Applikationsknoten ausgeführten Instanz auf. Diese Funktion wird nach einer Aufforderung zum Beenden einer Instanz verwendet. Dadurch lassen sich Instanzen auf einem Applikationsknoten beenden und auf einem anderen erneut ausführen.

Durch die weitgehend autonome und selbständige Entscheidungsfindung der Applikationsagenten AA in den Applikationsknoten AK ist eine kontinuierliche Kontrolle und Überwachung der einzelnen Instanzen auf den Applikationsknoten AK durch die Kontrollknoten oder zentral arbeitende Überwachungsmittel nicht mehr notwendig.

Eine Übersicht über die Funktionen des Kontrollagenten KA liefert Figur 4. Der Kontrollagent KA erhält von den Applikationsagenten AA das jeweilige Testament und verwaltet diese. Damit registrieren sich die Applikationsagenten im Cluster. Aus den Testamenten T der Applikationsagenten AA erzeugt der Kontrollagent eine Liste mit allen im Cluster befindlichen Applikationsknoten AK inklusive deren Hardwareinformationen und Betriebsparametern. Dadurch erhält der Kontrollagent selbständig eine aktuelle Konfiguration des Clusters und registriert auch dynamische Veränderungen. Weiterhin ist der Kontrollagent KA mit einem Mittel zur Überprüfung UP der Funktionsfähigkeit und der Anwesenheit aller Applikationsknoten AK über das Netzwerk NW1 versehen. Die Funktionsfähigkeit und die Anwesenheit eines Applikationsknotens AK wird durch Senden eines einfachen Anwesenheitssignals von dem Applikationsagenten mitgeteilt. Beispielsweise kann der Kontrollagent KA über das Netzwerk NW1 ein Ping-Signal an die einzelnen Applikationsknoten AK senden.

Bei Ausfall eines Applikationsknotens, das durch eine fehlende Antwort auf einen Funktionstest angezeigt wird, wertet der Kontrollagent KA das Testament zu den zugehörigen Applikationsknoten AK aus und extrahiert daraus Teiltestamente TI3. Diese Teiltestamente werden zusammen mit einer Aufforderung AF zur Ausführung dieser Instanz in das Netzwerk NW1 und an die verbliebenen Applikationsknoten AK geleitet. Alternativ dazu besitzt der Kontrollagent KA eine Funktion, um einen Applikationsknoten zur Ausführung einer Instanz zu bestimmen. Da in der Clusteranordnung der Figur 1 der Applikationsknoten AK' keine Instanz aufweist, bestimmt der Kontrollknoten KA diesen Applikationsknoten AK' zur Ausführung der Instanzen I1, I2 und I3 nach einem Ausfall des Applikationsknotens AK1. Durch das von dem Applikationsagenten AA des Applikationsknotens AK1 übermittelte Testament T ist ein Start der ausgefallenen Instanzen auf dem Applikationsknoten AK' möglich.

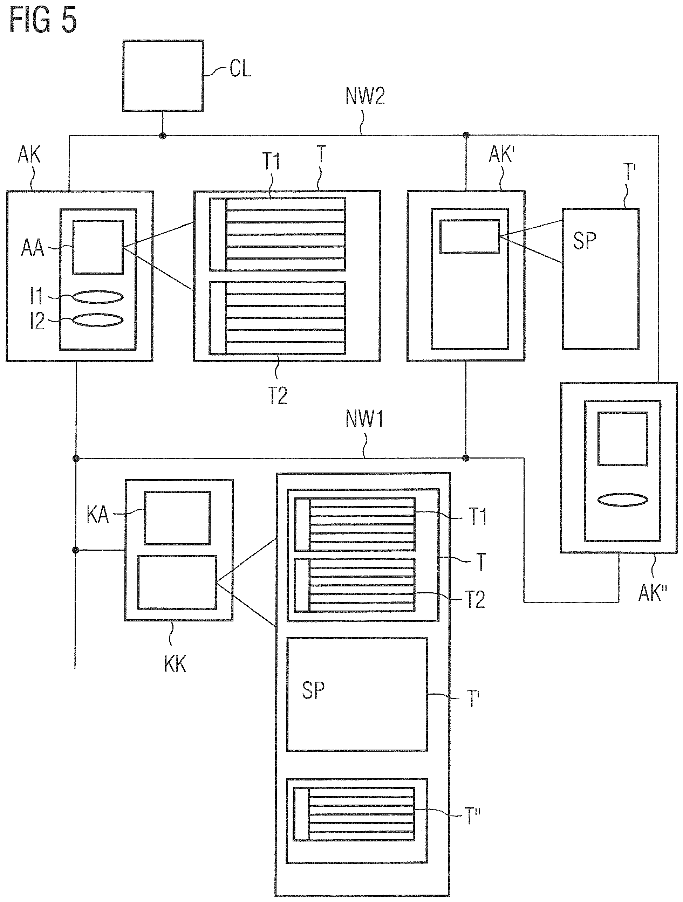

Figur 5 zeigt einen Ausschnitt der Clusteranordnung gemäß dem Ausführungsbeispiel, der ein neuer Applikationsknoten AK'' hinzugefügt wird. Auf einem Applikationsknoten AK werden zwei Instanzen I1 und I2 ausgeführt. Auf dem Applikationsknoten AK' wird keine Instanz ausgeführt. Der Applikationsagent AA des Applikationsknotens AK hat ein Testament T mit den beiden Teiltestamenten TI1 und TI2 erstellt und dieses an den Kontrollknoten KK und an den Kontrollagenten KA übermittelt. Der Applikationsagent des Knotens AK' übermittelt ein leeres Testament T' an den Kontrollagenten KA und zeigt mit einem Eintrag SP in seinem Testament T' an, daß der Applikationsknoten AK' zum Start einer Instanz bereit ist. Mit dem Eintrag wird der Knoten AK' als freier Knoten gekennzeichnet.

Der Kontrollagent KA verwaltet seinerseits eine Liste mit den Testamenten T und T' der Applikationsknoten AK und AK' und überprüft die Knoten auf Anwesenheit, indem der Agent KA periodisch ein Statussignal von den Applikationsagenten AA der Knoten anfordert. Bei Änderung der Betriebsparameter einer überwachten Instanz I auf einem Applikationsknoten AK, der Beendigung oder dem Start einer neuen Instanz wird diese Änderung von dem jeweiligen Applikationsagent AA automatisch an den Kontrollagenten KA des Kontrollknotens KK übermittelt. Somit enthält die Liste des Kontrollagenten KA immer den aktuellen Stand der Testamente der Applikationsknoten AK. Zusätzlich erhält er Informationen über die Hardwareparameter der Applikationsknoten.

Es wird nun ein neuer Applikationsknoten AK'' mit dem Netzwerk NW1 verbunden. Nach einer Initialisierungsphase startet der Applikationsagent AA auf dem Knoten AK''. Die Überwachungsfunktion UB des Agenten AA überprüft die auf dem Applikationsknoten AK" ausgeführten Prozesse, Instanzen und Anwendungen und erkennt automatisch die von dem Applikationsagenten AA zu überwachende Instanz I3. Zusammen mit Betriebsparametern des Applikationsknotens erzeugt der Agent daraus das Testament T" mit einem Teiltestament, das alle für den Betrieb der Instanz I3 notwendigen Daten und Parameter enthält. Das erzeugte Testament T'' des Applikationsknotens AK'' wird an den Kontrollagenten KA übermittelt. Damit registriert sich der Applikationsagent im Cluster und zeigt an, daß auf dem Applikationsknoten AK" eine Instanz ausgeführt wird, die überwacht wird. Der Kontrollagent KA überprüft nun die Anwesenheit der Applikationsknoten AK, AK' und AK'' gemäß der in seiner Liste vorhandenen Testamente.

Wird der Applikationsknoten AK'' vom Netzwerk NW1 getrennt oder vorzeitig beispielsweise durch einen Stromausfall abgeschaltet, so führt eine Überprüfung der Anwesenheit zu einem negativen Ergebnis. Der Kontrollagent KA sendet das Testament T'' mit einer Aufforderung zur Ausführung der im Testament befindlichen Instanzen an die Applikationsknoten AK und AK'. Die Applikationsagenten AA empfangen das Testament und treffen mittels ihrer Messung, ihres Gedächtnisses und der externen Parameter eine Entscheidung darüber, ob das gesamte Testament oder Teiltestamente auf dem Applikationsknoten ausgeführt werden können.

Der Applikationsagent des Applikationsknotens AK' trifft eine positive Entscheidung und nimmt das gesamte Testament T" an. Der Agent startet die Instanz I3 gemäß der im Testament vorgegebenen Parameter auf seinem Knoten neu und übermittelt ein neues Testament T' an den Kontrollagenten, welches nun ein Teiltestament der neuen Instanz I3 beinhaltet. Der Eintrag SP entfällt.

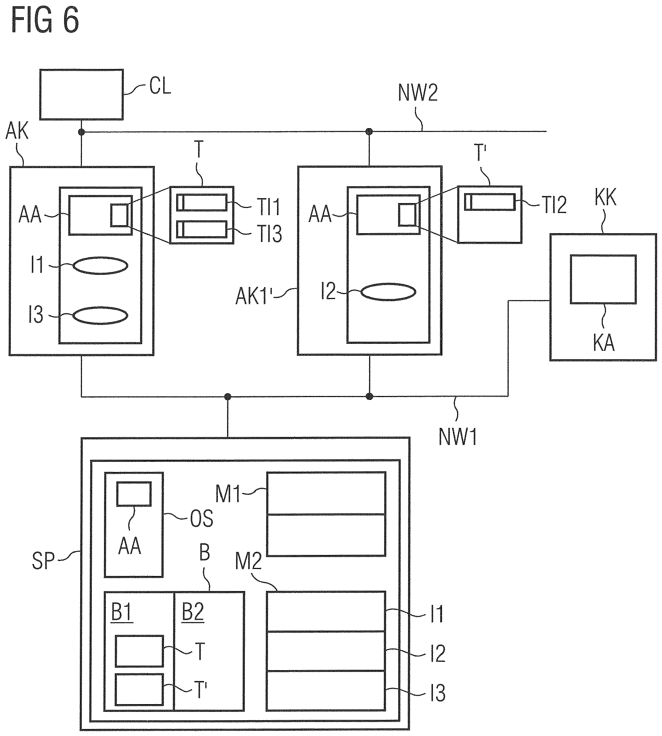

Ein weiteres Ausführungsbeispiel der Erfindung zeigt Figur 6. Die Clusteranordnung weist zwei Applikationsknoten AK und AK', sowie eine Speichereinrichtung SP und einen Kontrollknoten KK auf, die untereinander über ein Netzwerk NW1 verbunden sind. Eine Kommunikation der Knoten untereinander und mit der Speichereinrichtung SP findet mittels des TCP/IP-Protokolls statt.

Die ausgeführten und von den Applikationsagenten überwachten Instanzen I1, I3 und I2 bilden das Modul M2, das in der Speichereinrichtung SP abgelegt ist. Weiterhin enthält die Speichereinrichtung SP das Modul M1, sowie das von den Applikationsknoten gemeinsam verwendete Betriebssystem OS mit dem Applikationsagenten AA. Die Speichereinrichtung SP weist einen Bereich B auf, der in zwei Teilbereiche B1 und B2 unterteilt ist.

Der Bereich B ist les- und schreibbar für alle Applikationsagenten AA und den Kontrollagenten KA ausgebildet. Die Applikationsagenten legen die Testamente ihrer Applikationsknoten in dem Teilbereich B1 in der Speichereinrichtung SP ab. Bei einer Veränderung auf einem Applikationsknoten erzeugt der Applikationsagent dieses Knotens ein neues Testament und ersetzt damit das ältere Testament im Bereich B1. Der Kontrollagent des Kontrollknotens wertet die Testamente im Bereich B1 aus, und erzeugt somit eine Liste der von ihm zu überwachenden Applikationsknoten.

Die Applikationsagenten eines jeden Knotens werten ferner periodisch den Bereich B2 der Speichereinrichtung aus. Im Bereich B2 werden Aufforderungen zur Ausführung einer Instanz abgelegt. In dieser Ausbildung erfolgt eine Aufforderung durch die Ablage eines Testamentes oder eines Teiltestamentes in den Bereich B2. Die Applikationsagenten lesen das in dem Bereich B2 abgelegte Testament oder Teiltestament und treffen ihre autonome Entscheidung über die Ausführung. Ist ein Applikationsknoten in der Lage das Testament zu übernehmen, so löscht er das Testament aus dem Bereich B2 und startet die angegebene Instanz. Die Aufforderung oder die Meldung nach einer Annahme erfolgt in einfacher Weise durch Ablage eines Testamentes in den Bereich B2 oder Löschen eines Testamentes aus dem Bereich. Eine Ablehnung der Aufforderung ergibt sich automatisch dadurch, daß das Testament im Bereich B2 verbleibt.

Ein Applikationsagent, der eine Instanz beendet, legt das Testament in dem Bereich B2 ab, so daß ein anderer Applikationsknoten diese übernehmen kann. Fällt ein Applikationsknoten vollständig aus, wobei der Applikationsagent nicht in der Lage ist, dies vorher durch Ablegen seines Testamentes in den Bereich B2 anzuzeigen, so verschiebt der Kontrollagent das Testament des ausgefallenen Applikationsknotens in den Bereich B2. Die Applikationsagenten der restlichen Knoten treffen dann ihrerseits eine Entscheidung. Auf diese Weise wird eine hohe Flexibilität erreicht. Durch die Unterteilung eines Testamentes in mehrere Teiltestamente lassen sich die Instanzen eines ausgefallenen Applikationsknotens auf mehrere Knoten verteilen. Durch die Autonomie der Applikationsagenten und den gemeinsam genutzten Speicher der Einrichtung SP ist selbst bei Ausfall des Kontrollknotens KK ein fehlerfreier Betrieb gewährleistet.

Neben den hier aufgeführten Beispielen lassen sich eine Vielzahl weiterer Ausführungen finden. Insbesondere die Regeln zur Entscheidungsfindung der Applikationsagenten, die Funktionen und Aufgaben der Kontroll- und Applikationsagenten und die Parametern in den Testamenten sind erweiterbar.

Ein weiteres Ausführungsbeispiel der Erfindung betrifft die Gruppierung einzelner Datenverarbeitungssysteme innerhalb der Clusteranordnung zu einem sogenannten virtuellen Cluster. Dabei werden einigen Datenverarbeitungssysteme innerhalb der Clusteranordnung eine Identifikation zugeordnet und diese so zu einem Pool zusammengefasst. Der Begriff virtuell bezeichnet dabei lediglich eine durch eine Regel bestimmte logische Zuordnung verschiedener Datenverarbeitungssystem zueinander. Eine Poolbildung innerhalb einer Clusteranordnung mit mehreren Datenverarbeitungssystemen ist besonders dann vorteilhaft, wenn verschiedenste Applikationen hochverfügbar gehalten werden sollen. So ist es zweckmäßig, einige Datenverarbeitungssysteme speziell für die Ausführung eines Datenbankservices vorzusehen, während andere Datenverarbeitungssysteme des gleichen physikalischen Clusters für eine Web-Applikation vorgesehen sind.

Die Poolbildung erfolgt dabei nach generischen Regeln. Diese können beispielsweise abhängig von der zur hochverfügbaren Applikation sein, beispielsweise aber auch reine Hardwareparameter umfassen. Weiterhin ist es mit einer Poolbildung innerhalb eines physikalischen Clusters möglich, einzelne Poole verschiedenen Benutzergruppen zuzuweisen. Die von der jeweiligen Benutzergruppe gestarteten Applikationen werden dann nur auf den Datenverarbeitungssystemen ausgeführt und hochverfügbar gehalten, welche dem jeweiligen Pool zugeordnet sind. Ein solcher Pool aus mehreren Datenverarbeitungssystemen, die einander zugeordnet sind, wird auch als virtueller Cluster innerhalb der physikalischen Clusteranordnung bezeichnet.

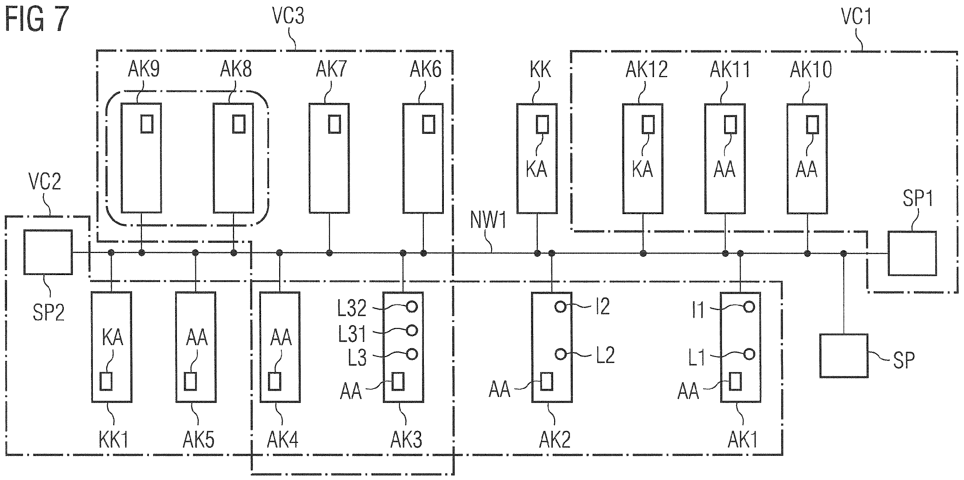

Ein Ausführungsbeispiel einer Clusteranordnung mit mehreren darin enthaltenen virtuellen Clustern bzw. Pools zeigt Figur 7. Der dort dargestellte Cluster enthält mehrere Speichereinrichtungen SP, SP1 und SP2, welche über ein gemeinsames Netzwerk NW mit mehreren Datenverarbeitungssystemen verbunden sind. Diese Datenverarbeitungssysteme sind dabei jeweils als Computer mit Hauptprozessor und Hauptspeicher ausgerüstet. Zwölf dieser Datenverarbeitungssysteme sind als Applikationsknoten AK1 bis AK12 ausgebildet. Zwei weitere Datenverarbeitungssysteme bilden die Kontrollknoten KK und KK1. Auf jedem der Applikationsknoten AK1 bis AK12 wird jeweils ein Applikationsagent AA ausgeführt. Die Kontrollknoten KK und KK1 enthalten jeweils einen Kontrollagenten KA.

Die physikalische Clusteranordnung umfasst in diesem Ausführungsbeispiel 3 virtuelle Cluster VC1, VC2 und VC3. Der virtuelle Cluster VC1 enthält die drei Applikationsknoten AK10, AK11 und AK12 sowie die Speichereinrichtung SP1. Der virtuelle Cluster VC2 umfasst die Applikationsknoten AK1 bis AK5, den Kontrollknoten KK1 sowie die Speichereinrichtung SP2. Die Applikationsknoten AK3 und AK4 sind zudem gemeinsam mit den Applikationsknoten AK6 bis AK9 dem virtuellen Cluster VC3 zugeordnet. Der Kontrollknoten KK sowie die Speichereinrichtung SP ist in diesem Ausführungsbeispiel nicht Teil eines virtuellen Clusters.

Die Zuordnung der einzelnen Applikationsknoten AK bzw. Kontrollknoten KK zu den jeweiligen Pools eines virtuellen Clusters erfolgt über generische Regeln. Diese Regeln können teilweise von einem externen Benutzer vorgegeben sein, von dem Kontrollagenten KA eines Kontrollknotens KK vorgegeben werden oder sich aus den Testamenten der einzelnen Applikationsagenten auf den Applikationsknoten AK ergeben. Zur Identifikation der einzelnen virtuellen Cluster und zur Zuordnung einzelner Knoten des physikalischen Clusters zu einem Pool wird bevorzugt der Teil einer IP-Adresse oder eine IP-Adresse selbst verwendet. Beispielsweise wird den Applikationsknoten AK10, AK11 und AK12 des virtuellen Clusters VC1 eine IP-Adresse zugeordnet, die zu einem Teil übereinstimmt. Knoten der physikalischen Clusteranordnung, deren IP-Adresse den gleichen Teil aufweist gehört so zu dem gleichen Pool bzw. virtuellen Cluster. Nachrichten von oder an Knoten in diesem virtuellen Cluster enthalten ebenso diese Identifikation. Durch entsprechende Auswertung der Agenten auf den Datenverarbeitungssystemen werden Nachrichten mit einer anderen Identifikation ignoriert.

Auf dem Applikationsknoten AK1 des virtuellen Clusters VC2 wird der Applikationsagent AA sowie die Instanz L1 und Instanz I1 ausgeführt. Der Applikationsknoten AK2 enthält die Instanzen L2 und I2. Die Instanzen I1 des Applikationsknotens AK1 und die Instanz I2 des Applikationsknotens AK2 bilden gemeinsam eine Applikation. Diese gemeinsame Applikation wird auf den verschiedenen Applikationsknoten AK1 bis AK5 des virtuellen Clusters VC2 hochverfügbar gehalten. Eine Aufforderung zum Start einer der beiden Instanzen I1 bzw. I2 für die Gesamtapplikation I wird daher nur dann angenommen, wenn der entsprechende Applikationsknoten dem virtuellen Cluster VC2 zugeordnet ist.

Der Applikationsknoten AK3 umfasst neben seinem Applikationsagenten AA auch die Teilinstanz L3 sowie die Instanzen L31 und L32, die jeweils hochverfügbar ausgeführt werden. Die Instanz L3 bildet gemeinsam mit den Instanzen L2 und L1 der Applikationsknoten AK2 und AK1 eine weitere Applikation des virtuellen Clusters VC2. Die Applikationsknoten AK4 und AK5 stellen Reserveknoten dar, auf denen keine weitere Instanz des virtuellen Knotens VC2 ausgeführt wird.

Die Applikationsknoten AK3 und AK4 sind außerdem auch Bestandteil des virtuellen Clusters VC3. Für die Auswertung von Aufforderungen sowie das Absenden von Aufforderungen zum Starten einer Instanz ist es daher notwendig, dass die Applikationsagenten AA auf den Applikationsknoten AK3 und AK4 eine entsprechende Aufforderung immer an die Applikationsagenten eines Knotens senden, der dem gleichen Pool angehört. Dazu enthält beispielsweise der Applikationsagent AA auf dem Knoten AK3 ein Testament bereit, welches um die Funktionalität einer eindeutigen Zuordnung der einzelnen Instanzen zu dem virtuellen Cluster erweitert wurde.

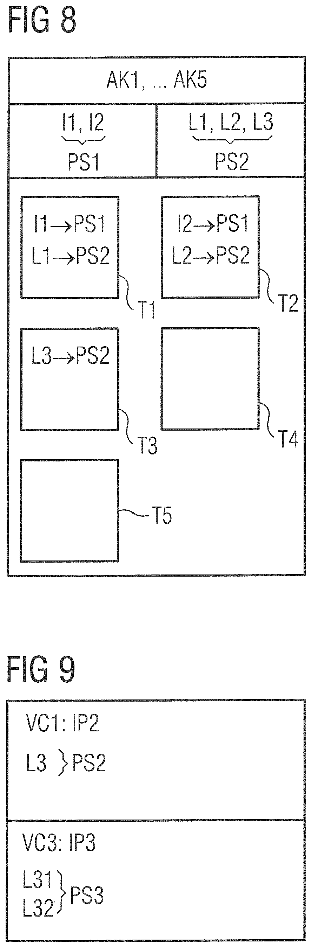

Ein Ausschnitt aus diesem Testament ist in Figur 9 zu sehen. Das Testament unterteilt sich dabei in zwei größere Teilbereiche, die jeweils die Applikationen der beiden Pools enthalten, deren Bestandteil der Knoten AK3 ist. Dies sind die Poole bzw. virtuellen Clusters VC2 sowie VC3. Der virtuelle Cluster VC2 umfasst eine Identifikationsnummer IP1, die eine eindeutige Zuordnung zu dem virtuellen Cluster ermöglicht. Weiterhin wird die Instanz L3 auf dem virtuellen Cluster VC3 ausgeführt. Für alle Nachrichten, welche die Instanz L3 betreffen, wird so die Zuordnung IP1 mitgesandt. Agenten, deren Knoten nicht die gleiche Zuordnung aufweisen, sind nicht Teil dieses virtuellen Clusters und ignorieren somit die Nachricht.

Der zweite Teilbereich umfasst alle Teiltestamente für die auf dem Knoten ausgeführten Instanzen, die dem virtuellen Cluster VC3 zuzuordnen sind. Der Pool VC3 weist die Identifikation IP2 auf. Innerhalb dieses Teilbereichs des Testaments werden so von dem Applikationsagenten AA die Teiltestamente für die Instanzen L31 und L32 verwaltet. Die jeweiligen Teiltestamente L31 und L32 enthalten neben den Parametern zur Ausführung dieser Teiltestamente auch Zuordnung zu dem virtuellen Cluster VC3. Bei Ausfall einer der Instanzen und einer fehlgeschlagenen Neu-Initialisierung der ausgefallenen Instanz erzeugt der Applikationsagent AA des Knotens AK3 das Teiltestament mit der Zuordnungskennung für den virtuellen Cluster, auf dem diese Instanz ausgeführt wird. Bei Ausfall der Instanz L31 oder L32 wird ein Teiltestament erzeugt, das dem virtuellen Cluster VC3 durch die Identifikation IP3 zugeordnet ist, bei Ausfall der Instanz L3 wird ein entsprechendes Teiltestament mit der Zuordnungsidentifikation IP2 erzeugt.

Der Agent AA sendet dann an die Applikationsknoten eine Aufforderung zur Ausführung dieser Instanz. Die jeweiligen Applikationsagenten auf den Applikationsknoten werten diese Aufforderung aus und prüfen als erstes, ob sie Teil des virtuellen Clusters mit der gleichen Kennung sind. Sind sie nicht Teil des virtuellen Clusters, auf dem die Instanz ausgeführt werden soll, wird die Aufforderung zur Ausführung ignoriert. Anderenfalls wird geprüft, ob die dafür notwendigen Ressourcen für die Ausführung zur Verfügung stehen.

Dem Pool VC2 ist zusätzlich ein Kontrollknoten KK1 mit einem Kontrollagenten KA zugeordnet, um die Verfügbarkeit und die Ausfallsicherheit zu erhöhen. Dazu erzeugen die Applikationsagenten AA auf den Applikationsknoten AK1 bis AK5 ihre Teiltestamente und legen sie in einem gemeinsam les- und schreibbaren Speicherbereich auf dem Massenspeicher SP2 ab. Der Kontrollagent KA auf dem Kontrollknoten KK1 überwacht die Funktionsfähigkeit der einzelnen Applikationsknoten AK1 und deren Agenten AA durch in regelmäßigen Zeitabständen abgesandten Statusmeldungen.

Eine schematische Darstellung dieses Speicherbereichs und der einzelnen übermittelten Teiltestamente der Applikationsagenten auf den Applikationsknoten AK1 bis AK5 zeigt die Figur 8. So ist in einer Gesamtliste unter anderem abgelegt, welcher Applikationsknoten AK dem virtuellen Cluster VC2 zugeordnet ist. Weiterhin wird eine Liste mit Applikationen angelegt, die auf dem virtuellen Cluster VC2 momentan ausgeführt werden. Im Einzelnen sind dies die Applikationen mit den Teilinstanzen I1 und I2 sowie die Applikation mit den Teilinstanzen L1, L2 und L3. Jeder dieser Applikation ist eine Priorität zugeordnet. Die jeweiligen Teilinstanzen erben diese Priorität. Die Priorität gibt an, wie wichtig die einzelnen auf dem virtuellen Cluster VC2 ausgeführten Applikationen sind. Sie bilden somit eine Reihen- bzw. Rangfolge der ausgeführten Applikationen.

Im Beispiel besitzt die Applikation mit den beiden Teilinstanzen I1 und I2 die Prioritätskennziffer PS1 und die Applikation mit den Teilinstanzen L1, L2 und L3 die Prioritätskennziffer PS2. Die Prioritätskennziffer PS2 ist dabei kleiner als die Kennziffer PS1, die Applikation mit den Teilinstanzen L1, L2 und L3 ist somit unwichtiger als die Applikation mit den Teilinstanzen I1 und I2.

Weiterhin enthält der Speicherbereich des Speichers SP2 die Testamente T1 bis T5 der einzelnen Applikationsknoten AK1 bis AK5. Diese enthalten jeweils die Teiltestamente für die auf dem jeweiligen Applikationsknoten AK1 bis AK5 ablaufenden Teilinstanzen. Die Testamente T4 und T5 der Applikationsknoten AK4 und AK5 sind leer.

Der Kontrollagent KA des Kontrollknotens KK überwacht regelmäßig die Hochverfügbarkeit der einzelnen Applikationsknoten. Fällt nun beispielsweise der Applikationsknoten AK1 vollständig aus, so werden auch nicht mehr die Teilinstanzen I1 bzw. L1 ausgeführt. Der Kontrollagent KA auf dem Kontrollknoten KK erzeugt nun aus dem Testament T1 zwei Teiltestamente für die Teilinstanz I1 und L1. Dann wird aufgrund der höheren Prioritätskennziffer das Teiltestament mit der Instanz I1 zusammen mit einer Aufforderung zur Ausführung dieser Teilinstanz an die einzelnen Applikationsknoten innerhalb des physikalischen Clusters über das Netzwerk gesandt. Innerhalb dieses Teiltestaments ist zudem angegeben, welchem virtuellen Cluster die auszuführende Instanz I1 zugeordnet ist.

Die Applikationsagenten AA auf den Applikationsknoten AK, welche nicht dem virtuellen Cluster VC2 zugeordnet sind, ignorieren die Aufforderung zur Ausführung. Dahingegen überprüfen die Agenten AA auf den Applikationsknoten AK2 bis AK5 ihre Ressourcen. Einer der Applikationsagenten AA übernimmt gegebenenfalls das Teiltestament und bringt die Instanz I1 auf ihrem Knoten zur Ausführung. Nach einem Starten der Teilinstanz I2 wird eine entsprechende Meldung an den Kontrollagenten KA zurückgesandt. Erst wenn die Teilinstanz I1 zusammen mit dem Teiltestament von einem der Applikationsagenten AA innerhalb des virtuellen Clusters übernommen und erfolgreich zur Ausführung gebracht wurde, sendet der Kontrollagent KA das Teiltestament mit der Teilinstanz L2 zusammen mit einer Aufforderung zur Ausführung.

Durch diese Priorisierung der einzelnen Applikationen bzw. Instanzen werden immer Applikationen mit hohen Prioritäten hochverfügbar gehalten. Nur wenn ausreichend Kapazität vorhanden ist, werden auch Instanzen mit niedrigerer Priorität erneut zur Ausführung gebracht. In diesem Ausführungsbeispiel übernimmt der Kontrollagent KA auf dem Kontrollknoten KK1 innerhalb des virtuellen Clusters VC2 die Erzeugung der Teiltestamente sowie die Aufforderung zur Ausführung der Teilinstanzen.

Ist der Ausfall des Applikationsknoten AK3 absehbar, so registriert dies der Applikationsagent AA des Knotens AK3. Der Agent AA des Knotens erzeugt ein Teiltestament mit der Teilinstanz L3 und eine Aufforderung zur Ausführung und sendet dieses an die an die Applikationsknoten der physikalischen und der virtuellen Clusteranordnung. Weiterhin erzeugt der Applikationsagent AA auf dem Applikationsknoten AK3 zwei Teiltestamente mit den Teilinstanzen L31 und L32, die der ebenfalls mit einer Aufforderung zur Ausführung an die Clusteranordnung sendet. Die Teilinstanzen L31 und L32 sind jedoch dem virtuellen Cluster VC3 zugeordnet und werden von den Applikationsknoten AK1, AK2 und AK5 ignoriert. Bei geeignet freien Ressourcen können jedoch der Applikationsknoten AK4 bzw. AK6 bis AK9 die Teilinstanzen L31 und L32 übernehmen.

In diesen Ausführungsbeispielen werden die Meldungen an alle Applikationsknoten innerhalb der physikalischen Clusteranordnung gesendet. Eine Bearbeitung erfolgt jedoch nur, wenn die Meldung von einem Knoten im gleichen Pool stammt. In einer Erweiterung ist es auch möglich, Meldungen nur an Knoten innerhalb des gleichen virtuellen Clusters zu senden. Damit wird zwar das Datenaufkommen reduziert, die Flexibilität jedoch auch eingeschränkt.

Es ist zudem zweckmäßig, dafür zu sorgen, dass eine niedrig priorisierte Instanz, welche auf einem Applikationsknoten unplanmäßig beendet wird, nicht in der Lage ist, den Applikationsagenten zum Neustart des gesamten Applikationsknotens zu bewegen, wenn auf diesem noch eine Instanz mit höherer Priorität fehlerfrei ausgeführt wird. Beispielsweise kann der Applikationsagent AA auf dem Applikationsknoten AK2 bei einem Ausfall der Teilinstanz L2 keinen vollständigen Neustart des gesamten Applikationsknotens AK2 durchführen, wenn die Teilinstanz I2 mit höherer Priorität noch fehlerfrei ausgeführt wird. Für einen Neustart muss der Applikationsagent AA daher ein Teiltestament mit der Teilinstanz I2 und der Aufforderung zur Ausführung an die Applikationsknoten des virtuellen Clusters VC2 senden. Bei einer Bestätigung einer Annahme und der erfolgreichen Ausführung dieser Teilinstanz kann dann der Applikationsagent AA auf dem Applikationsknoten AK2 einen vollständigen Neustart des Applikationsknotens AK2 initialisieren.

Durch diese Zuordnung zu einzelnen virtuellen Clustern mit Hilfe einer Teil-IP-Adresse kann sehr dynamisch und flexibel auf mögliche Veränderungen in den Ressourcen-Anforderungen reagiert werden. Zusätzlich lässt sich auch innerhalb eines virtuellen Clusters eine weitere Gruppenbildung oder Poolbildung zwischen einzelnen Datenverarbeitungssystemen vorsehen. Bei dem virtuellen Cluster VC3 bilden beispielsweise die Applikationsknoten AK8 und AK9 eine weitere Gruppe innerhalb des virtuellen Clusters. Auch diese Gruppenbildung ist über generische Regeln steuerbar. Zudem kann ein weiterer Kontrollknoten KK mit einem Kontrollagenten KA vorgesehen sein, der die komplette Clusterstruktur überwacht und die einzelnen Datenverarbeitungssysteme in regelmäßigen Abständen auf Anwesenheit kontrolliert. Werden weitere Datenverarbeitungssysteme dem physikalischen Cluster hinzugefügt, kann dieser Kontrollknoten die hinzugefügten Datenverarbeitungssysteme verschiedenen virtuellen Clustern zuordnen, um so deren virtuelle Kapazität zu steigern. Die Einführung einer Poolbildung durch Zuordnung einer Identifikation sowie die Priorisierung einzelner Teilinstanzen innerhalb eines Pools erlaubt eine sehr feine Abstufung und Auswahlregelung innerhalb einer physikalischen Clusteranordnung. Dabei sind die einzelnen Applikationsknoten sowie die Pools innerhalb eines physikalischen Clusteranordnung weitgehend selbständig konfigurierbar. Zusätzliche administrative Aufgaben entfallen weitgehend.

Insgesamt wird so ein deutlich geringerer Datenaustausch zwischen Kontrollknoten und Applikationsknoten bei gleichzeitig größter Flexibilität erreicht. Es ist sogar möglich, durch die Autonomie der einzelnen Applikationsknoten vollständig auf einen Kontrollknoten zu verzichten. Die Kontrolle, Steuerung und die Überwachung der Abläufe auf den Knoten obliegt den Applikationsagenten, die keine direkte Kommunikation untereinander aufweisen. Die Ausbildung des Applikationsagenten ermöglicht ein selbständiges Erkennen und Überwachen von Instanzen. Dadurch entfällt eine aufwendige Konfiguration und es ist insbesondere keine genaue Kenntnis über die Clusterstruktur notwendig, da diese selbständig generiert wird. Gerade bei einem Einsatz von Clustern, die häufig ihre Knotenanzahl ändern, eröffnet dieses Konzept der autonomen Überwachung eine hohe Flexibilität.

### Bezugszeichenliste:

- AK, AK, AK', AK'':: Applikationsknoten
- KK:: Kontrollknoten
- KA:: Kontrollagent
- AA:: Applikationsagent
- CL:: Clientrechner
- NW1, NW2:: Netzwerke
- SP, SP1:: Speichereinrichtung
- M1, M2, M3:: Module
- I1, I2, ..., I7:: Instanzen
- SUI:: Subinstanz
- Pr:: Prozesse
- IP1, IP2, IP3:: Kennzeichnung
- OS:: Betriebssystem
- T, T', T'':: Testamente
- T1, T2, T3:: Teiltestamente
- D:: Daten
- L, UB, ST, ME, AF, BE:: Funktionen
- UP, BS:: Funktionen
- SP:: Kennzeichnung
- B, B1, B2:: Speicherbereich

## Patentansprüche

1. Clusteranordnung mit
- einem ersten Netzwerk (NW1);
- zumindest zwei jeweils einen Applikationsknoten (AK) bildende Datenverarbeitungssysteme, die jeweils ein Betriebssystem (OS) aufweisen, wobei ein Applikationsknoten (AK) eine Instanz (I1, I2, I3, I4) aufweist, die ausgeführt wird;
- einem Applikationsagenten (AA) auf jedem Applikationsknoten (AK), der ein Dienst des Betriebssystems (OS) ist, nach der Initialisierung des Betriebssystems (OS) gestartet wird und der folgende Funktionsmittel aufweist:
- Start (ST) einer neuen Instanz (I3);
- Beenden einer ausgeführten Instanz (I3);
- Beurteilung (BE) und Entscheidung mittels einer Beurteilungsfunktion und einer Liste (T), ob die Ausführung einer neuen Instanz (I3) auf dem Applikationsknoten (AK) möglich ist;
- Überwachung (UB) und Erkennen von auf dem Applikationsknoten (AK) ausgeführter Instanzen (I1, I2, I3), wobei die Überwachung (UB) weiter umfasst:Erstellen der Liste (T), die jeweils die auf dem Applikationsknoten (AK) ausgeführten Instanzen (I1, I2) und alle für die Ausführung der ausgeführten Instanz notwendigen Daten (D) als Teillisten (TI1, TI2) beinhaltet, und die Liste (T) weiter eine Kennzeichnung aufweist, dass der Applikationsknoten (AK) zur Ausführung neuer Instanzen zur Verfügung steht, wenn die Überwachung (UB) keine zu überwachenden Instanzen ermittelt;
- und die Überwachung (UB) weiter ein Erkennen eines nicht gewünschten vorzeitigen Beendens einer fehlerhaft ausgeführten Instanz (I3) durch Auswertung der Daten (D) der Liste (T) umfasst;
- Neustart der fehlerhaft ausgeführten Instanz (I3);
- Beenden der fehlerhaft ausgeführten Instanz (I3) bei nicht efolgreichem Neustart sowie Erzeugen einer Teilliste (TI3) in der Liste (T) mit der fehlerhaft ausgeführten Instanz (I3);
- Aufforderung (AF) an andere Applikationsagenten (AA) mit dem Netzwerk (NW1) verbundener Applikationsknoten zur Ausführung der fehlerhaft ausgeführten Instanz (I3), indem die Teilliste (TI3) an die anderen Applikationsagenten (AA) der mit dem Netzwerk (NW1) verbundenen Applikationsknoten (AK) versandt wird;
- Meldung (ME) an die anderen Applikationsagenten (AA) mit dem Netzwerk (NW1) verbundener Applikationsknoten (AK) nach einer Annahme der Aufforderung (AF) zur Ausführung einer Instanz (I3);
- Meldung (ME) an die anderen Applikationsagenten (AA) mit dem Netzwerk (NW1) verbundener Applikationsknoten (AK), wenn der Applikationsagent eine Aufforderung zur Ausführung einer Instanz ablehnt.

2. Clusteranordnung nach Anspruch 1, **dadurch gekennzeichnet, dass** die Funktion der Überwachung (UB) des Applikationsagenten (AA) zum Erkennen von Abhängigkeiten auf dem Applikationsknoten ausgeführter Instanzen von anderen Instanzen und/oder Parametern ausgebildet ist, indem die Liste (T) periodisch ausgewertet wird.

3. Clusteranordnung nach Anspruch 1 oder 2, **dadurch gekennzeichnet, dass** die Liste (T) auch Informationen über den Applikationsknoten aufweist.

4. Clusteranordnung nach einem der Ansprüche 1 bis 3, **dadurch gekennzeichnet, dass**
- eine Speichereinrichtung (SP) mit dem ersten Netzwerk (NW1) verbunden ist und die zumindest eine auf einem Applikationsknoten (AK) ausführbare Instanz (I1) aufweist und
- in der Speichereinrichtung (SP) das Betriebssystem (OS) für die Applikationsknoten (AK) abgelegt ist.

5. Clusteranordnung nach einem der Ansprüche 1 bis 4, **dadurch gekennzeichnet, dass** der Applikationsagent des Applikationsknotens, ein Dienst des auf dem Applikationsknoten laufenden Betriebssystems (OS) ist.

6. Clusteranordnung nach einem der Ansprüche 1 bis 5, **dadurch gekennzeichnet, dass** ein Applikationsknoten (AK') vorgesehen ist, auf dem die Ausführung einer neuen Instanz (I3) möglich ist.

7. Clusteranordnung nach einem der Ansprüche 1 bis 6, **dadurch gekennzeichnet, dass** die Clusteranordnung zumindest ein als Kontrollknoten (KK) ausgebildetes Datenverarbeitungssystem aufweist, das mit dem ersten Netzwerk verbunden ist und bei dem der Kontrollknoten (KK) ein Betriebsystem und einen Kontrollagenten (KA) aufweist, der folgende Funktionen aufweist:
- Überprüfung (UP) der Funktionsfähigkeit der Applikationsknoten (AK), die mit dem ersten Netzwerk (NW1) verbunden sind;
- Aufforderung (AF) an Applikationsagenten (AA) mit dem Netzwerk (NW1) verbundenen Applikationsknoten (AK) zur Ausführung einer Instanz;
- Bestimmung (BS) eines Applikationsknoten (AK) und Aufforderung an diesen Applikationsknoten zur Ausführung einer neuen Instanz.

8. Clusteranordnung nach Anspruch 7, **dadurch gekennzeichnet, dass** bei einer Überprüfung (UP) der Applikationsknoten (AK) die zu überprüfenden Applikationsknoten (AK) über die von den Applikationsagenten (AA) der Applikationsknoten (AK) erstellten Listen (T) ermittelbar ist.

9. Clusteranordnung nach Anspruch 1 oder 7, **dadurch gekennzeichnet, dass** die Aufforderung (AF) zur Ausführung eine erstellte Teilliste (TI1, TI2) eines Applikationsagenten (AA) aufweist.

10. Clusteranordnung nach einem der Ansprüche 1 bis 9, **dadurch gekennzeichnet, dass** die erstellte Liste (T) und/oder die Aufforderung (AF) zur Ausführung und/oder die Meldung (ME) als zumindest eine Datei in der Speichereinrichtung (SP) abgelegt ist.

11. Clusteranordnung nach einem der Ansprüche 1 bis 10, **dadurch gekennzeichnet, dass** jede in der Speichereinrichtung (SP) abgelegte Instanz eine eindeutige Kennzeichnung aufweist, die dem Applikationsknoten (AK) zugeordnet wird, auf dem die Instanz ausgeführt wird.

12. Clusteranordnung nach einem der Ansprüche 1 bis 11, **dadurch gekennzeichnet, dass** das erste Netzwerk (NW1) für eine Kommunikation mit dem TCP/IP oder dem NFS-Protokoll ausgebildet ist.

13. Clusteranordnung nach einem der Ansprüche 7 bis 12, **dadurch gekennzeichnet, dass** der zumindest eine Kontrollknoten (KK) Mittel zur Steuerung eines Initialisierungsvorgangs der Applikationsknoten (AK) aufweist, wobei der Initialisierungsvorgang ein Kommando zum Laden des Betriebssystems (OS) des Applikationsknotens (AK) aufweist.

14. Clusteranordnung nach einem der Ansprüche 1 bis 13, **dadurch gekennzeichnet, dass** die zumindest zwei Applikationsknoten (AK, AK') mit einem zweiten Netzwerk (NW2) verbunden sind, das mit einem Client-Rechner (CL) verbunden ist.

15. Clusteranordnung nach einem der Ansprüche 1 bis 14, **dadurch gekennzeichnet, dass** die in der Speichereinrichtung (SP) abgelegten Instanzen eine Datenbank aufweisen.

## Claims

1. A cluster arrangement, comprising
- a first network (NW1);
- at least two data processing systems each forming an application node (AK) and having an operating system (OS), an application node (AK) comprising an instance (I1, I2, I3, I4) which is executed;
- an application agent (AA) on each application node (AK) which is a service of the operating system (OS), is started after initialization of the operating system (OS) and has the following functional means:
- starting (ST) a new instance (I3);
- exiting an executed instance (I3);
- evaluating (BE) and deciding using an evaluating function and a list (T) whether it is possible to execute a new instance (I3) on the application node (AK);
- monitoring (UB) and detecting instances (I1, I2, I3) executed on the application node (AK), wherein the monitoring (UB) further comprises: creating the list (T) which contains the instances (I1, I2) executed on the application node (AK) and all data (D) required for executing the executed instance as partial lists (TI1, TI2), and the list (T) further has an indicator that the application node (AK) is available for executing new instances if the monitoring (UB) determines no instances to be monitored;
- and the monitoring (UB) further comprises identifying an undesired premature termination of an incorrectly executed instance (I3) by evaluating the data (D) of the list (T);
- restarting the incorrectly executed instance (I3);
- exiting the incorrectly executed instance (I3) if the restart was unsuccessful and creating a partial list (TI3) in list (T) with the incorrectly executed instance (I3);
- requesting (AF) other application agents (AA) of application nodes connected to the network (NW1) to execute the incorrectly executed instance (I3) by sending the partial list (TI3) to the other application agents (AA) of the application nodes (AK) connected to the network (NW1);
- message (ME) to the other application agents (AA) of application nodes (AK) connected to the network (NW1) after accepting the request (AF) to execute an instance (13);
- message (ME) to the other application agents (AA) of application nodes (AK) connected to the network (NW1) if the application agent rejects a request to execute an instance.

2. The cluster arrangement according to claim 1, **characterized in that** the function of the monitoring (UB) of the application agent (AA) for identifying dependencies of instances executed on the application node from other instances and/or parameters is formed by periodically evaluating the list (T).

3. The cluster arrangement according to claim 1 or 2, **characterized in that** the list (T) also contains information about the application node.

4. The cluster arrangement according to any of claims 1 to 3, **characterized in that**
- a storage device (SP) is connected to the first network (NW1) and comprises the at least one instance (I1) executable on an application node (AK), and
- the operating system (OS) for the application nodes (AK) is stored in the storage device (SP).

5. The cluster arrangement according to any of claims 1 to 4, **characterized in that** the application agent of the application node is a service of the operating system (OS) running on the application node.

6. The cluster arrangement according to any of claims 1 to 5, **characterized in that** an application node (AK') is provided on which the execution of a new instance (I3) is possible.

7. The cluster arrangement according to any of claims 1 to 6, **characterized in that** the cluster arrangement comprises at least one data processing system which is designed as a control node (KK) and is connected to the first network, and in which the control node (KK) comprises an operating system and a control agent (KA) which has the following functions:
- checking (UP) the functionality of the application nodes (AK) that are connected to the first network (NW1);
- requesting (AF) application agents (AA) of application nodes (AK) connected to the network (NW1) to execute an instance;
- determining (BS) an application node (AK) and requesting said application node to execute a new instance.

8. The cluster arrangement according to claim 7, **characterized in that**, during a check (UP) of the application nodes (AK), the application nodes (AK) to be checked can be determined via the lists (T) created by the application agents (AA) of the application nodes (AK).

9. The cluster arrangement according to claim 1 or 7, **characterized in that** the request (AF) for execution includes a created partial list (TI1, TI2) of an application agent (AA) .

10. The cluster arrangement according to any of claims 1 to 9, **characterized in that** the created list (T) and/or the request (AF) for execution and/or the message (ME) is stored as at least one file in the storage device (SP).

11. The cluster arrangement according to any of claims 1 to 10, **characterized in that** each instance stored in the storage device (SP) has a unique identifier that is assigned to the application node (AK) on which the instance is executed.

12. The cluster arrangement according to any of claims 1 to 11, **characterized in that** the first network (NW1) is designed for communication with the TCP/IP or the NFS protocol.

13. The cluster arrangement according to any of claims 7 to 12, **characterized in that** the at least one control node (KK) has means for controlling an initialization process of the application nodes (AK), the initialization process having a command for loading the operating system (OS) of the application node (AK).

14. The cluster arrangement according to any of claims 1 to 13, **characterized in that** the at least two application nodes (AK, AK') are connected to a second network (NW2) which is connected to a client computer (CL).

15. The cluster arrangement according to any of claims 1 to 14, **characterized in that** the instances stored in the storage device (SP) have a database.

## Revendications

1. Agencement en cluster comprenant
- un premier réseau (NW1) ;
- au moins deux systèmes de traitement de données formant respectivement un noeud d'application (AK) et qui présentent respectivement un système d'exploitation (OS), sachant qu'un noeud d'application (AK) présente instance (I1, I2, I3, I4) qui est exécutée ;
- un agent d'application (AA) sur chaque noeud d'application (AK), lequel est un service du système d'exploitation (OS), est démarré après l'initialisation du système d'exploitation (OS) et présente les moyens fonctionnels suivants :
- démarrage (ST) d'une nouvelle instance (I3) ;
- cessation d'une instance (I3) exécutée ;
- évaluation (BE) et décision à l'aide d'une fonction d'évaluation et d'une liste (T) pour décider si l'exécution d'une nouvelle instance (I3) sur le noeud d'application (AK) est possible ;
- surveillance (UB) et détection d'instances (I1, I2, I3) exécutées sur le noeud d'application (AK), sachant que la surveillance (UB) comprend en outre : l'établissement de la liste (T) qui contient respectivement, sous forme de listes partielles (TI1, TI2), les instances (I1, I2) exécutées sur le noeud d'application (AK) et toutes les données (D) nécessaires pour l'exécution de l'instance exécutée, et la liste (T) présente en outre un repérage indiquant que le noeud d'application (AK) est disponible pour l'exécution de nouvelles instances si la surveillance (UB) ne détermine pas d'instances à surveiller ;
- et la surveillance (UB) comprend en outre une détection d'une cessation prématurée non souhaitée d'une instance (I3) incorrectement exécutée par dépouillement des données (D) de la liste (T) ;
- redémarrage de l'instance (I3) incorrectement exécutée ;
- cessation de l'instance (I3) incorrectement exécutée en cas de redémarrage infructueux ainsi que génération d'une liste partielle (TI3) dans la liste (T) avec l'instance (I3) incorrectement exécutée ;
- demande (AF) à d'autres agents d'application (AA) de noeuds d'application reliés au réseau (NW1) d'exécuter l'instance (I3) incorrectement exécutée en ce que la liste partielle (TI3) est envoyée aux autres agents d'application (AA) des noeuds d'application (AK) reliés au réseau (NW1) ;
- signalisation (ME) aux autres agents d'application (AA) de noeuds d'application (AK) reliés au réseau (NW1) après une acceptation de la demande (AF) d'exécution d'une instance (I3) ;
- signalisation (ME) aux autres agents d'application (AA) de noeuds d'application (AK) reliés au réseau (NW1) si l'agent d'application rejette une demande d'exécution d'une instance.

2. Agencement en cluster selon la revendication 1, **caractérisé en ce que** la fonction de surveillance (UB) de l'agent d'application (AA) est configurée pour la détection de dépendances d'instances exécutées sur le noeud d'application par rapport à d'autres instances et/ou paramètres **en ce que** la liste (T) est dépouillée périodiquement.

3. Agencement en cluster selon la revendication 1 ou 2, **caractérisé en ce que** la liste (T) présente aussi des informations sur le noeud d'application.

4. Agencement en cluster selon l'une des revendications 1 à 3, **caractérisé en ce que**
- un dispositif de mémoire (SP) est relié au premier réseau (NW1) et présente l'au moins une instance (II) exécutable sur un noeud d'application (AK) et
- le système d'exploitation (OS) pour le noeud d'application (AK) est stocké dans le dispositif de mémoire (SP).

5. Agencement en cluster selon l'une des revendications 1 à 4, **caractérisé en ce que** l'agent d'application du noeud d'application est un service du système d'exploitation (OS) fonctionnant sur le noeud d'application.

6. Agencement en cluster selon l'une des revendications 1 à 5, **caractérisé en ce qu'**un noeud d'application (AK') est prévu sur lequel l'exécution d'une nouvelle instance (I3) est possible.

7. Agencement en cluster selon l'une des revendications 1 à 6, **caractérisé en ce que** l'agencement en cluster présente au moins un système de traitement de données constitué comme noeud de contrôle (KK), et qui est relié au premier réseau et dans lequel le noeud de contrôle (KK) présente un système d'exploitation et un agent de contrôle (KA) qui présente les fonctions suivantes :
- vérification (UP) de la fonctionnalité des noeuds d'application (AK) qui sont reliés au premier réseau (NW1) ;
- demande (AF) à des agents d'application (AA) de noeuds d'application (AK) reliés au réseau (NW1) d'exécuter une instance ;
- détermination (BS) d'un noeud d'application (AK) et demande à ce noeud d'application d'exécuter une nouvelle instance.

8. Agencement en cluster selon la revendication 7, **caractérisé en ce que**, lors d'une vérification (UP) des noeuds d'application (AK), les noeuds d'application (AK) à vérifier sont déterminables via les listes (T) établies par les agents d'application (AA) des noeuds d'application (AK).

9. Agencement en cluster selon la revendication 1 ou 7, **caractérisé en ce que** la demande (AF) d'exécution présente une liste partielle (TI1, TI2) établie d'un agent d'application (AA).

10. Agencement en cluster selon l'une des revendications 1 à 9, **caractérisé en ce que** la liste (T) établie et/ou la demande (AF) d'exécution et/ou la signalisation (ME) est stockée sous forme d'au moins un fichier dans le dispositif de mémoire (SP).

11. Agencement en cluster selon l'une des revendications 1 à 10, **caractérisé en ce que** chaque instance stockée dans le dispositif de mémoire (SP) présente un repérage univoque qui est attribué au noeud d'application (AK) sur lequel l'instance est exécutée.

12. Agencement en cluster selon l'une des revendications 1 à 11, **caractérisé en ce que** le premier réseau (NW1) est constitué pour une communication avec le protocole TCP/IP ou NFS.

13. Agencement en cluster selon l'une des revendications 7 à 12, **caractérisé en ce que** l'au moins un noeud de contrôle (KK) présente des moyens de commande d'une opération d'initialisation des noeuds d'application (AK), sachant que l'opération d'initialisation présente un ordre de chargement du système d'exploitation (OS) du noeud d'application (AK).

14. Agencement en cluster selon l'une des revendications 1 à 13, **caractérisé en ce que** les au moins deux noeuds d'application (AK, AK') sont reliés à un deuxième réseau (NW2) qui est relié à un ordinateur client (CL).

15. Agencement en cluster selon l'une des revendications 1 à 14, **caractérisé en ce que** les instances stockées dans le dispositif de mémoire (SP) présentent une base de données.
